(19) Europäisches Patentamt
European Patent Office
Office européen des brevets

(11) EP 1 342 015 B1

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(21) Anmeldenummer: **01999756.8**

(22) Anmeldetag: **09.10.2001**

(51) Int Cl.⁷: **F15B 21/08**, F15B 11/028, G05D 27/02

(86) Internationale Anmeldenummer:
**PCT/DE2001/003859**

(87) Internationale Veröffentlichungsnummer:
**WO 2002/046624 (13.06.2002 Gazette 2002/24)**

(54) **VERFAHREN ZUM BETRIEB EINER REGELANORDNUNG FÜR EIN HYDRAULISCHES SYSTEM**

METHOD FOR OPERATING A CONTROL DEVICE FOR A HYDRAULIC SYSTEM

PROCEDE PERMETTANT DE FAIRE FONCTIONNER UN DISPOSITIF DE REGULATION D'UN SYSTEME HYDRAULIQUE

(84) Benannte Vertragsstaaten:
**AT BE CH CY DE DK ES FI FR GB GR IE IT LI LU MC NL PT SE TR**

(30) Priorität: **05.12.2000 DE 10060285**

(43) Veröffentlichungstag der Anmeldung:
**10.09.2003 Patentblatt 2003/37**

(73) Patentinhaber: **ROBERT BOSCH GMBH**
**70442 Stuttgart (DE)**

(72) Erfinder: **BLUMENDELLER, Wilhelm**
**71691 Freiberg (DE)**

(74) Vertreter: **Thürer, Andreas**
**c/o Bosch Rexroth AG**
**97813 Lohr am Main (DE)**

(56) Entgegenhaltungen:
EP-A- 0 332 132      DE-A- 2 519 207
DE-A- 4 140 392      DE-A- 19 828 752
US-A- 4 411 609      US-A- 5 645 775

• ULRICH H ET AL: "VERGLEICH VON REGELUNGSKONZEPTEN FUER EINE ELEKTRO-HYDRAULISCH DRUCKGEREGELTE VERSTELLPUMPE" OLHYDRAULIK UND PNEUMATIK, KRAUSSKOPF VERLAG FUR WIRTSCHAFT GMBH. MAINZ, DE, Bd. 36, Nr. 9, 1. September 1992 (1992-09-01), Seiten 602-608,611-61, XP000300954 ISSN: 0341-2660 in der Anmeldung erwähnt
• PATENT ABSTRACTS OF JAPAN vol. 012, no. 087 (M-678), 19. März 1988 (1988-03-19) -& JP 62 227617 A (JAPAN STEEL WORKS LTD:THE), 6. Oktober 1987 (1987-10-06)
• "HYDRAULIK NACH MASS ODER: FLEXIBEL ZU HOCHWERTIGEN, GROSSEN SPRITZGUSSTEILEN" OLHYDRAULIK UND PNEUMATIK, KRAUSSKOPF VERLAG FUR WIRTSCHAFT GMBH. MAINZ, DE, Bd. 39, Nr. 10, 1. Oktober 1995 (1995-10-01), Seite 730,732,734,73 XP000535957 ISSN: 0341-2660
• SCHNEIDER H ET AL: "PROZESSUBERWACHUNG MITTELS DIGITALER HYDRAULIKSENSOREN" PLASTVERARBEITER, ZECHNER UND HUETHIG VERLAG GMBH. SPEYER/RHEIN, DE, Bd. 46, Nr. 8, 1. August 1995 (1995-08-01), Seiten 22,24-25, XP000524706 ISSN: 0032-1338

## Beschreibung

Stand der Technik

Die Erfindung betrifft Verfahren zum Betrieb einer Regelanordnung und eine solche Regelanordnung für ein hydraulisches System nach der Gattung des Hauptanspruchs.

Es ist bereits aus der DE 198 28 752 A1 eine solche Regelanordnung bekannt, bei der insbesondere der Druck und andere Größen in einer hydraulischen Vorrichtung, hier ein Verstellorgan für eine Zylinder, gemessen und durch Vorgaben der Regelanordnung beeinflusst werden. Diese Beeinflussung erfolgt in an sich bekannter Weise mit einem der hydraulischen Vorrichtung vorgeschalteten stetig verstellbarem Regelventil, dessen Ventilschieber beispielsweise elektromagnetisch verstellt wird. Bekannt sind hieraus außerdem elektrohydraulische Druckregelkreise mit einer stetig verstellbaren Pumpe als Stellglied.

Die zuvor genannten Ventile oder Pumpen können dabei mit einer sogenannten Feldbusankopplung sowie mit digital ausgeführten Reglern wie z.B. einem digitalen Druckregler ausgestattet sein. Diese digitale Anbindung und Signalbeeinflussung im Regelkreis bietet gegenüber den analogen Ventilen neue Möglichkeiten hinsichtlich der Diagnosefähigkeit, der Benutzerfreundlichkeit sowie eine qualitativ bessere Regelgüte und die Möglichkeit neuer flexibler Konzepte, die auf spezielle Eigenschaften im System ausgelegt werden können.

Bekannt sind aus dem eingangs genannten Stand der Technik außerdem ablösende Regelanordnungen für hydraulische Zylinderantriebe, bei denen zwei Regelungen wie z.B. Geschwindigkeits- und Druckregelung kombiniert werden können. Das Problem bei diesen Regelungen liegt in der Erkennung des Übergangs zwischen den einzelnen Regelungsarten. Beispielsweise kann hier eine Umschaltung des Drucksollwertes in Abhängigkeit von vorgegebenen Schwellwerten oder z.B. auch in Abhängigkeit einer Zylinderposition des Stellzylinders erfolgen.

Voraussetzung für die oben genannten Möglichkeiten von flexiblen Regelungskonzepten mit digitalen Reglern, die auf spezielle Eigenschaften im System ausgelegt werden können, sind jedoch in der Regel Methoden der Identifikation der spezifischen Charakteristika des Regelkreises, die es ermöglichen, dass auswertbare Veränderungen im hydraulischen Regelkreis auch erkannt werden können.

Beispiele hierfür sind aus dem Fachaufsatz "Vergleich von Regelungskonzepten für eine elektro-hydraulisch druckgeregelte Verstellpumpe" in der Zeitschrift "Ölhydraulik und Pneumatik", 36(1992)Nr.9, Seiten 602-613, zu entnehmen. Hier ist z.B. beschrieben, wie aus dem Pumpenstellweg und dem Systemdruck eine Verbraucharakteristik im Regelkreis identifiziert werden kann.

Aus der EP 0 332 132 A2 ist ein hydraulisches Steuersystem zur Regelung des Drucks einer Hydraulikflüssigkeit in einem abgeschlossenen Volumen bekannt. Das System umfasst eine Pumpe und ein Ventil, das in Abhängigkeit von Steuersignalen einer elektronischen Ventilregeleinrichtung eines elektronischen Steuersignals betätigt wird. Zur Druckregelung wird als Funktion einer Differenz, die zwischen einem Druckbefehlsignal und einem als Funktion eines ersten Verstärkungsfaktors variierten Druckrückkopplungssignal besteht und mit einem zweiten Verstärkungsfaktor multipliziert ist, ein Ventilsteuersignal bereitgestellt. Es wird das abgeschlossene Volumen der Hydraulikflüssigkeit bestimmt und der zweite Verstärkungsfaktor als Funktion des abgeschlossenen Volumens geändert.

Vorteile der Erfindung

Ein Verfahren zum Betrieb einer Regelanordnung für ein hydraulisches System, bei dem die Istwerte im Hydraulischen System durch Sensoren erfasst werden und der Druck der Hydraulikflüssigkeit im hydraulischen System geregelt wird, ist mit den kennzeichnenden Merkmalen des Hauptanspruchs in vorteilhafter Weise weitergebildet. Hierbei werden die Druck-Istwerte und die Auslenkung des Stellsignals im hydraulischen System durch Sensoren erfasst und es wird das wirksame Systemvolumen der Hydraulikflüssigkeit im abgeschlossenen Volumen der Druckregelstrecke aus den gemessenen Werten berechnet und aus dem berechneten Systemvolumen werden Systemparameter zur automatisierten Reglerparametrierung in der Regelanordnung hergeleitet.

Besonders vorteilhaft wird das wirksame Systemvolumen aus den gemessenen Werten mittels der Bestimmung der hydraulischen Kapazität der Regelstrecke während des Betriebs der Regelstrecke fortdauernd oder in Intervallen bestimmt. Einzelne Verfahrensschritte, die anhand des in den Figuren dargestellten Ausführungsbeispiels näher erläutert werden, sind:

- Die Istwerte des Drucks und des Ventil- oder Pumpenhubs als Auslenkung des Stellsignals werden in vorgegebenen Zeitabständen abgetastet,

- die abgetasteten Signale werden gefiltert und mit einem Differenzierglied wird der Druckgradient ermittelt,

- der Druckgradient wird mit einem Schwellwertdetektor daraufhin untersucht, ob in einer vorgegebenen Zeit eine ausreichende Druckänderung stattfindet,

- ist die Druckänderung kleiner als der vorgegebene Schwellwert, wird die hydraulische Kapazität ($C_H$) gleich Null gesetzt,

- ist die Druckänderung größer als der vorgegebene Schwellwert, wird der Volumenstrom berechnet, anschließend mit der annähernd gleichen Filterzeitkonstanten wie im Differenzierglied gefiltert und aus den so ermittelten Werten wird die hydraulische Kapazität ($C_H$) berechnet.

Bei Kenntnis des so ermittelten wirksamen Systemvolumens steht somit auf einfache Weise der wichtigste Systemparameter zur Parametrierung eines Druckreglers zur Verfügung. Eine Änderung dieses Parameters über einen längeren Zeitraum lässt Rückschlüsse auf die Systemeigenschaften wie z.B. eine Leckage im hydraulischen System zu und kann damit vorteilhaft zu Diagnosezwecken genutzt werden. Besonders vorteilhaft ist, dass die Identifikation der Systemparameter im geschlossenen Regelkreis durchgeführt werden kann, so dass die identifizierte Größe nach sehr kurzer Zeit, z.B. nahezu bei Beginn des Regelvorganges, mit hoher Genauigkeit und Robustheit zur Verfügung steht. Weiterhin ist vorteilhaft, dass die Führungsgröße des Regelkreises hier ein beliebiges Signalverhalten aufweisen darf, beispielsweise eine Rechteck-, Dreieck- oder Sinusform, dass ferner die Richtung der Signaländerung (Druckauf- oder -abbau) keinen Einfluss auf das Ergebnis hat und dass der Rechenaufwand relativ gering ist, so dass auch eine Online-Identifikation während des Betriebs möglich ist.

Gemäß einer vorteilhaften Ausführungsform wird das identifizierte Systemvolumen der hydraulischen Druckregelstrecke während des Betriebs mit künstlichen neuronalen Netzen (KNN) oder mittels einer Fuzzy-Logik ausgewertet und klassifiziert, so dass die Systemparameter der Regelanordnung einfach bestimmbar sind. Mit den neuronalen Netzen oder der Fuzzy-Logik ergeben sich z.B. Fehler bei der Identifikation, die kleiner als 5% sind. Bei einer entsprechenden Optimierung oder einer höheren Akzeptanz ist auch eine Verringerung des Rechenaufwand möglich.

Bei einer Ausführungsform des erfindungsgemäßen Verfahrens werden die Systemparameter zur Parametrierung der Regelanordnung in besonders vorteilhafter Weise zur Ermittlung eines Umschaltzeitpunktes für die Umschaltung von einer Geschwindigkeitsregelung oder -steuerung zu einer Druck- oder Kraftregelung in einer Regelanordnung herangezogen. Bei dieser Ausführungsform des erfindungsgemäßen Verfahrens kann sichergestellt werden, dass während der Geschwindigkeitsregelung eine Drucküberwachung den Geschwindigkeitsregelungsprozess durch ihr Eingreifen nur dann stört, wenn die Druckverhältnisse im hydraulischen System tatsächlich kritische Betriebszustände hervorrufen oder wenn im Druckregelprozess das gewünschte Führungsverhalten erzielt wird.

Der Prozess der Umschaltung kann hier in vorteilhafter Weise automatisch erfolgen, wobei das Verfahren sowohl für Antriebe mit einem Ventil wie auch mit einer elektrohydraulisch verstellbaren Pumpe geeignet ist. Auf einfache Weise kann der Umschaltzeitpunkt anhand eines aus dem Ventilhub des Stellantriebs berechneten Volumenstrom und einem aus dem Druckgradienten berechneten Volumenstrom ermittelt werden, wobei die Differenz der beiden Volumenströme ein Maß für den Umschaltzeitpunkt darstellt.

Der Umschaltzeitpunkt kann dabei vorteilhaft mit folgenden Verfahrensschritten ermittelt werden:

- Die Istwerte des Drucks und des Ventil- oder Pumpenhubs als Auslenkung des Stellsignals werden in vorgegebenen Zeitabständen abgetastet,

- durch differenzieren wird der Druckgradient ermittelt,

- der Volumenstrom wird einerseits aus dem Druckgradienten errechnet und

- der Volumenstrom wird andererseits aus dem Ventil- oder Pumpenhub errechnet.

Bei der aus dem Stand der Technik bekannten Lösung wären beispielweise die hier einzustellenden Schwellwerte für die Umschaltung stark von den Betriebsbedingungen wie z.B. der Lastmasse oder der Verfahrgeschwindigkeit abhängig, so dass ein beträchtlicher Aufwand zur Einstellung dieser Werte bei einer Änderung der Betriebsbedingungen notwendig ist. Das Verfahren gemäß der Erfindung ist dagegen weitestgehend unabhängig von diesen Betriebsbedingungen, da es darauf basiert, dass die Druckregelung bei einem abgeschlossenem Hydraulikvolumen erfolgt und es nutzt die bei elektrohydraulischen Antrieben vorhandenen Messsignale wie Druck und Stellgliedhub zur Berechnung des Umschaltzeitpunktes.

Eine Vorteilhafte Anwendung des erfindungsgemäßen Verfahrens ergibt sich insbesondere bei einer Regelanordnung, bei der ein elektrohydraulischer Druckregelkreis mit einem stetig verstellbaren Ventil oder einer stetig verstellbaren Pumpe, z.B. für einen Stellzylinder einer Spritzgussmaschine, ausgestattet ist. Diese sind mittels einer digitalen Feldbusankopplung mit einem digitalen Regler verbunden, wobei im Regler die Berechnung des Systemvolumens mittels eines Software-Moduls durchführbar ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Zeichnung

Ausführungsbeispiele einer Regelanordnung zur Erläuterung des erfindungsgemäßen Verfahrens werden anhand der Zeichnung erläutert. Es zeigen:

Figur 1 eine Prinzipdarstellung einer Regelanordnung für ein hydraulisches System mit einem stetig veränderbaren Ventil,

Figur 2 ein Ablaufplan zur Berechnung der hydraulischen Kapazität des Hydrauliksystems in der Regelanordnung nach der Figur 1,

Figur 3 ein Diagramm des Verlaufs des Drucks im Hydrauliksystem und des Weges eines Stellorgans der Regelanordnung über der Zeit,

Figur 4 ein Diagramm des Verlaufs des Druckgradienten und des Volumenstroms im Hydrauliksystem über der Zeit,

Figur 5 ein Diagramm des Verlaufs der aus den Werten nach der Figur 1 errechneten hydraulischen Kapazität über der Zeit,

Figur 6 ein Diagramm des Verlaufs der errechneten hydraulischen Kapazität über der Zeit mit unterschiedlichen Systemvolumina,

Figur 7 und 8 ein Diagramm des Verlaufs der errechneten hydraulischen Kapazität über der Zeit in Abhängigkeit vom Druckniveau und von der Richtung einer Druckänderung,

Figur 9 ein Diagramm der Änderung des Ersatzkompressionsmoduls der Hydraulikflüssigkeit in Abhängigkeit vom Druck,

Figur 10 eine Darstellung der normierten Eingangswerte der hydraulischen Kapazität als Merkmale zur Identifikation des Systemvolumens in dem Hydrauliksystem,

Figur 11 ein Diagramm des Verlaufs des Drucks über der Zeit bei einem Anfahren eines Stellzylinders an einen Anschlag,

Figur 12 ein Diagramm des Verlaufs des Hubs des Stellzylinders über der Zeit bei einem Anfahren des Stellzylinders an einen Anschlag,

Figur 13 ein Diagramm einer Gegenüberstellung von Volumenströmen im hydraulischen System, die einerseits aus dem gemessenen Druck und andererseits aus dem gemessenen Hub des Stellzylinders ermittelt werden,

Figur 14 ein Diagramm des Verlaufs des Drucks über der Zeit bei einem Anfahren eines Stellzylinders an einen Anschlag zur Ermittlung eines Umschaltzeitpunktes im Regelverfahren,

Figur 15 ein Diagramm des Verlaufs der Differenz der Volumenströme nach der Figur 13 unter Berücksichtigung eines Schwellwertes als Maß für einen Umschaltvorgang und

Figur 16 ein Ablaufplan der Berechnungsschritte zur Detektion des Umschaltzeitpunktes nach den Figuren 14 und 15.

Beschreibung der Ausführungsbeispiele

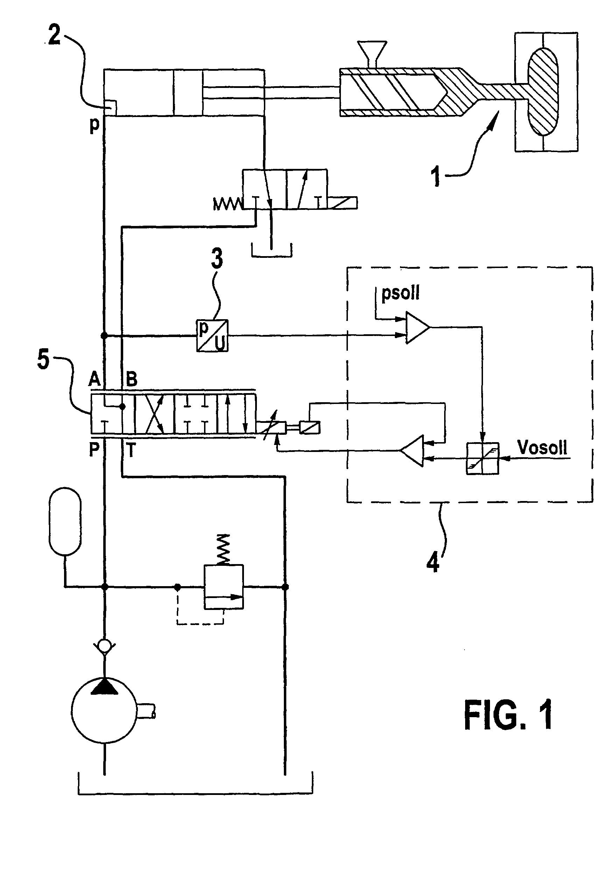

Bei einem Ausführungsbeispiel eine Regelanordnung nach Figur 1 ist gezeigt, dass das erfindungsgemäße Verfahren beispielsweise zur Regelung eines hydraulischen Stellzylinders für einen Spritzzylinder in einer Kunststoff-Spritzgießmaschine 1 eingesetzt werden kann. Um eine hohe Qualität des produzierten Spritzgießteils zu gewährleisten muss insbesondere die Einspritzgeschwindigkeit des flüssigen Kunststoffs, der Nachdruck und der Staudruck während des Gießprozesses auch bei teilweise Erkalten der Gießmasse möglichst gut geregelt werden.

Bei der Regelanordnung nach der Figur 1 wird der Druck-Istwert p im Volumenstrom der Hydraulikflüssigkeit mit einer geeigneten Sensorsanordnung 2 erfasst und mittels einem Signalwandler 3 in ein vorzugsweise digitales elektrisches Signal umgewandelt. In einem hier nur schematisch angedeuteten Regler 4 werden die gemessenen Werte und die Sollwerte für den Druck und den Volumenstrom der Hydraulikflüssigkeit ausgewertet und dann einem stetig verstellbaren Ventil 5 zugeführt. Die weiteren, hier nicht näher erläuterten Bauelemente, entsprechen dem an sich bekannten Aufbau eines hydraulischen Regelkreises.

Mit der hier gezeigten Anordnung kann somit das wirksame Systemvolumen der Hydraulikflüssigkeit im abgeschlossenen Volumen der Druckregelstrecke aus den gemessenen Werten berechnet und aus dem berechneten Systemvolumen die Systemparameter zur Parametrierung der Regelanordnung hergeleitet werden. Zur Identifikation des Systemvolumens stehen zwei Messsignale zur Verfügung, nämlich die Regelgröße Druck sowie die Auslenkung des Stellzylinders. Das wirksame Systemvolumen wird aus den gemessenen Werten mittels der Bestimmung der hydraulischen Kapazität $C_H$ der Regelstrecke während des Betriebs bestimmt.

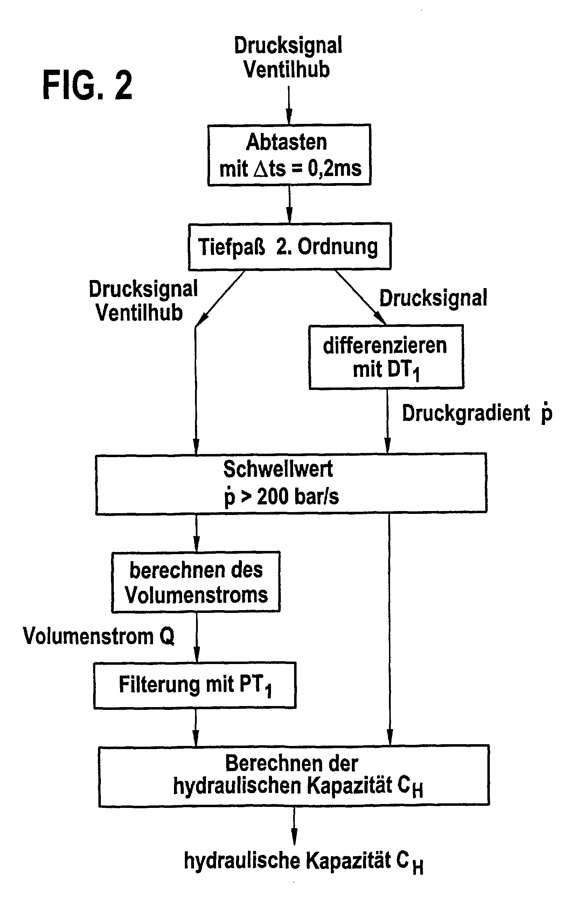

In Fig. 2 wird der Berechnungsablauf zur Ermittlung der hydraulischen Kapazität $C_H$ zusammenhängend anhand eines Ablaufplans dargestellt. Mit Hilfe des gemessenen Drucksignals p und des ebenfalls erfassten Wegsignals s ist es möglich die hydraulische Kapazität $C_H$, die bei einer Druckregelstrecke mit abgeschlossenem Volumen als Quotient aus dem Volumenstrom Q und dem Druckgradient dp/dt ($\dot{p}$) definiert ist, nach folgender Formel zu berechnen:

$$C_H = \frac{Vo}{E} = \frac{Q}{\dot{p}} \qquad (1)$$

mit E entsprechend dem Elastizitäts- oder besser dem Ersatzkompressionsmodul und Vo entsprechend dem Systemvolumen der Hydraulikflüssigkeit. Beim Ersatzkompressionsmodul E für die Hydraulikflüssigkeit wird hier ein standardisierter konstanter Wert angenommen, der einen gewissen üblichen Luftanteil und weitere bekannte Einflussgrößen beinhaltet.

Der Volumenstrom Q bzw. $Q_1$ ergibt sich dabei für ein Ventil mit linearer Kennlinie bei einem Konstantdrucksystem in Abhängigkeit vom Hub s des Stellgliedes, hergeleitet aus dem Durchflussgesetz durch eine Blende nach Bernoulli, durch die Beziehung:

$$Q_1 = Q_{nenn} \cdot s \cdot \sqrt{\frac{\Delta p}{\Delta p_{nenn}}} \qquad (2)$$

für $s \geq 0$ ergibt sich $\Delta p = p_0 - p_A$ und
für $s \leq 0$ ergibt sich $\Delta p = p_A - p_T$.
wobei $\Delta p_{nenn}$ die Nenndruckdifferenz, $Q_{nenn}$ den Nennvolumenstrom, $p_0$ den Systemdruck, $p_A$ den Druck am Stellzylinder, $p_T$ den Tankdruck im Hydrauliksystem und s den Ventilhub bezogen auf den Nennhub darstellt, wobei hier der Nennvolumenstrom $Q_{nenn}$ als ein schon vom Hersteller des Hydrauliksystems ermittelter Wert bekannt ist.

Wenn anstelle des Ventils eine Pumpe als Stellglied vorhanden ist, kann der Volumenstrom $Q_1$ auf folgende Weise bestimmt werden:

$$Q_1 = n \cdot V_{F\ddot{o}rder} \cdot s - Q_{Leck}, \qquad (3)$$

wobei n die Pumpendrehzahl, $V_{f\ddot{o}rder}$ das Fördervolumen pro Umdrehung, s den Pumpenhub bezogen auf den Nennhub und $Q_{Leck}$ die Leckage der Hydraulikflüssigkeit darstellt. Die Leckage $Q_{Leck}$ der Pumpe ist hierbei näherungsweise linear vom Druck p in folgender Weise abhängig:

$$Q_{Leck} = Faktor \cdot p \qquad (4)$$

Eine weitere Möglichkeit zur Berechnung des Volumenstroms Q bzw. $Q_2$ ergibt sich unter Heranziehung des Drucksignals p. Die hydraulische Kapazität $C_H$ ist hier definiert als:

$$C_H = \frac{Vo}{E_G} = \frac{Q_{zu} - Q_{ab}}{\dot{p}}, \qquad (5)$$

mit $E_G$ als dem Ersatzkompressionsmodul, $Q_{zu}$ als dem zufließenden Volumenstrom und $Q_{ab}$ als dem abfließenden Volumenstrom im Hydrauliksystem.

Bei einem abgeschlossenen Volumen kann der abfließende Volumenstrom $Q_{ab}$ zu Null angesetzt werden, so dass sich nach einer Umstellung der Formeln aus den vorherigen Gleichung folgendes ergibt:

$$Q_s = \frac{Vo}{E_G(p)} \cdot \dot{p}. \qquad (6)$$

Der Druckgradient $\dot{p}$ lässt sich hierbei durch Differenzieren des Drucksignals p, wie nachfolgend beschrieben, ermitteln.

Nach dem Ablaufplan aus der Figur 2 mit hier nur beispielhaft angegebenen Werten werden zur Unterdrückung von Störungen die Messsignale p und s zunächst abgetastet und in einem Tiefpass 2.Ordnung gefiltert. Nach einer Differenzierung des Drucksignals p zur Bestimmung des Druckgradienten detektiert ein Schwellwertdetektor die Zeit, in der im System eine ausreichende Druckänderung (z.B. >200 bar/s) stattfindet. Ist die Druckänderung kleiner als der vorgegebene Schwellwert wird im Ergebnis die hydraulische Kapazität $C_H$ gleich Null gesetzt. ,

Wird der Schwellwert jedoch überschritten so wird der Volumenstrom Q nach der Gleichung (2) oder (3) berechnet. Um eine Phasenverschiebung zwischen dem Volumenstrom Q bzw. $Q_1$ oder $Q_2$ und dem Druckgradienten auszuschließen, wird der Volumenstrom Q nachträglich noch einmal mit der gleichen Filterzeitkonstanten (PT1) gefiltert wie sie im zuvor erwähnten Differenziergliedlied (DT1) verwendet wird. Anschließend kann hier die hydraulische Kapazität $C_H$ berechnet werden.

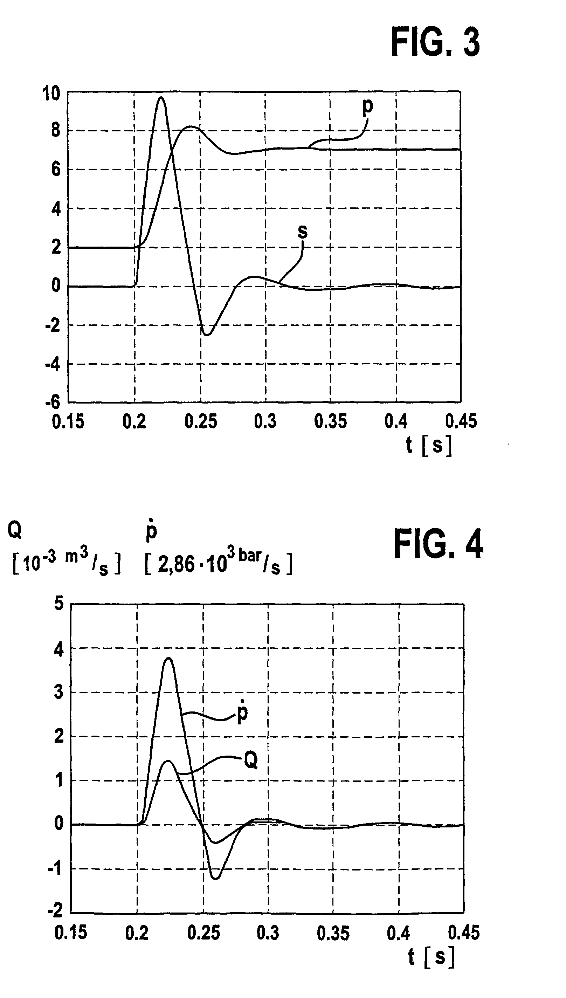

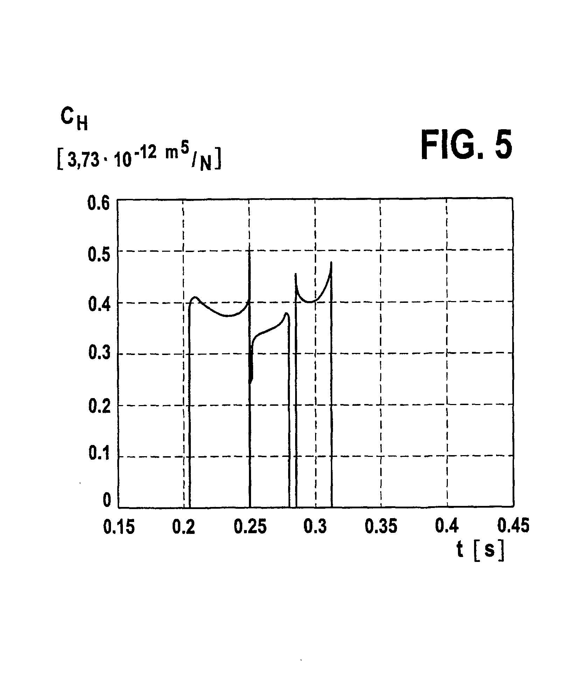

Anhand Figur 3 sind beispielhaft Signalverläufe für den Druck p und den Ventilhub s bei einem Drucksprung von 40 auf 140 bar gezeigt. In Figur 4 sind die aus den Messsignalen berechneten Größen für den Volumenstrom Q und den Druckgradienten entnehmbar. Aus Figur 5 ist der Verlauf der daraus abgeleiteten hydraulischen Kapazität $C_H$, wie in den vorhergehenden Fällen über der Zeit t, erkennbar.

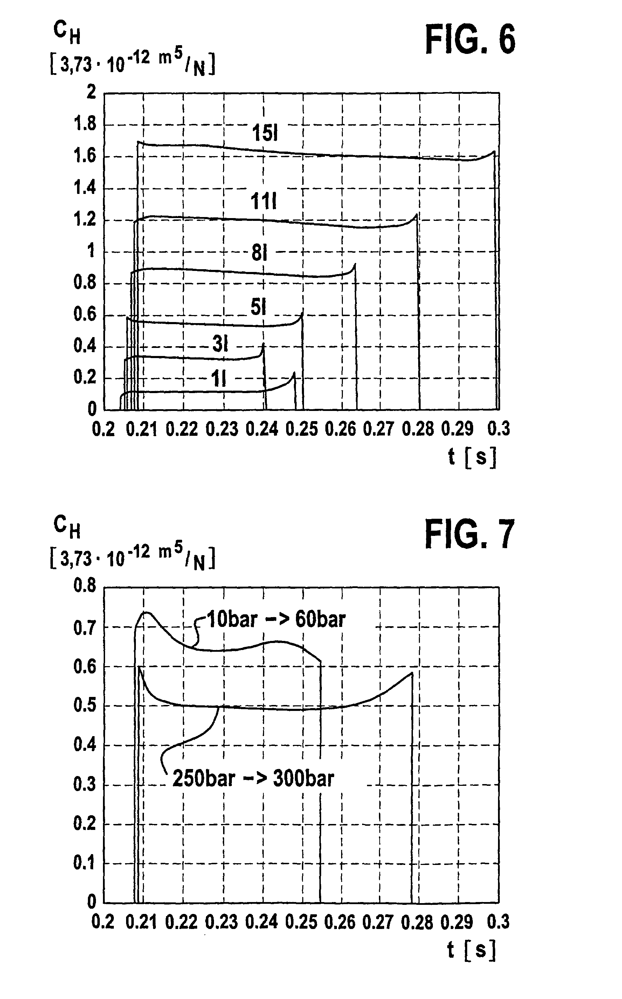

Figur 6 zeigt, wie sich die hydraulische Kapazität $C_H$ in Abhängigkeit von unterschiedlichen Systemvolumina über der Zeit t verhält. Man erkennt hier eine starke Abhängigkeit des $C_H$-Niveaus vom Volumen Vo des hydraulischen Systems.

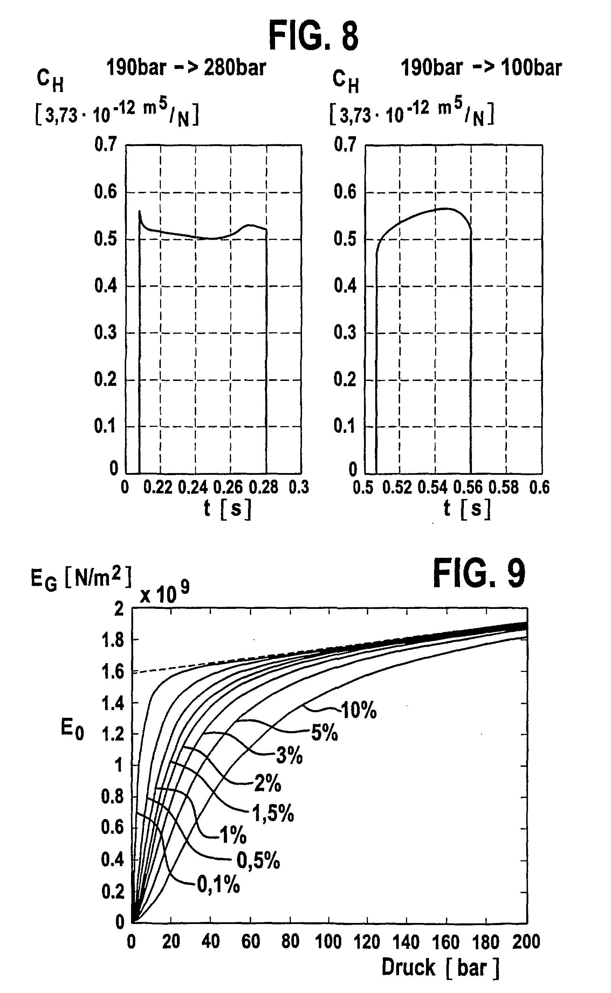

Aus Figur 7 ist zu entnehmen, dass der Kurvenverlauf der hydraulischen Kapazität $C_H$ nicht nur vom Volumen Vo des hydraulischen Systems sondern auch vom Niveau der Druckänderung bzw. von der Richtung der Signaländerung (Druckauf-/abbau) abhängt, was insbesondere auch aus den beiden Darstellungen nach Figur 8 erkennbar ist, bei der links eine Druckerhöhung von 190 auf 280 bar und im rechten Diagramm eine Druckminderung von 190 auf 100 bar gezeigt ist. Dieser Einfluss kann überwiegend auf die Änderung des Ersatzkompressionsmoduls $E_G$ in Abhängigkeit vom Druck p zurückgeführt werden.

In Figur 9 ist das Ersatzkompressionsmodul $E_G$ in Abhängigkeit vom Druck p und vom prozentualen Anteil (0,1 bis 10%) ungelöster Luft in der Hydraulikflüssigkeit dargestellt.

Um die Einflüsse vom Druckniveau und der Signalrichtung bei der Identifikation des Systemvolumens zu berücksichtigen kann nach dem Überschreiten des Druckgradientenschwellwertes zur Berechnung der hydraulischen Kapazität $C_H$ die Zeitdauer $\Delta t$ sehr kurz gewählt werden. Als Richtlinie bei einer Druckregelung mit einer Pumpe hat sich z.B. eine Zeitdauer von 8ms als ausreichend erwiesen. Hieraus ergibt sich eine Gesamtdauer für den gesamten Drucksprung ca. 100ms, d.h. nach 8% der Gesamtdauer eines Führungssprunges steht schon genügend Information zur Identifikation des Systemvolumens zur Verfügung.

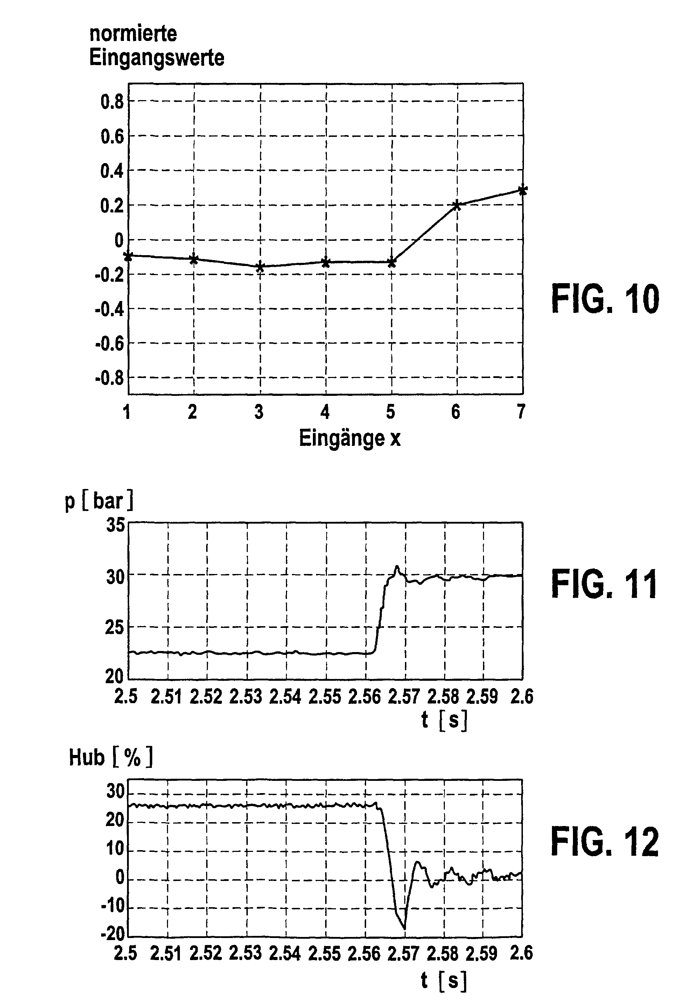

Bei einer Abtastrate des digitalen Druckreglers nach dem Ausführungsbeispiel von ca. 200 μs stehen nach ca. 8ms 41 $C_H$-Werte zur Verfügung, wobei es sich als sinnvoll erwiesen hat, von den 41 Werten 5 äquidistante Werte auszuwählen während die anderen verworfen werden können. Zusätzlich zu den 5 $C_H$-Werten wird der Druck p bei Beginn der Berechnung sowie der Druck p nach 8 ms gespeichert. Mit der Information dieser beiden Druckwerte kann dann sowohl die Sprungrichtung wie auch das Druckniveau erkannt werden. Nach einer Normierung der 5 $C_H$-Werte sowie der beiden Druckwerte p ergibt sich ein Merkmal zur Identifikation, wie es in Figur 10 für unterschiedliche Volumina dargestellt ist.

Das somit entwickelte Merkmal zur Identifikation des Systemvolumens einer hydraulischen Druckregelstrecke kann mit verschiedenen Klassifizierungsmethoden u.a. mit sog. künstlichen neuronalen Netzen (KNN) oder mit einer sog. Fuzzy-Logik ausgewertet werden. Mit den künstlichen neuronalen Netzen ergeben sich z.B. Fehler bei der Identifikation kleiner als 5%. Die im Diagramm nach der Figur 10 angegebene Anzahl der Merkmalswerte von 7 als normierte Eingangswerte ist als Richtwert zu sehen. Bei einer entsprechenden Optimierung oder Akzeptanz größerer Fehler sind auch weniger Werte und damit weniger Rechenaufwand möglich.

Eine Änderung des Ersatzkompressionsmoduls $E_G$ in Abhängigkeit von der Temperatur, dem Schlauchmaterial, dem Anteil ungelöster Luft usw. im Hydrauliksystem hat Auswirkung auf das Niveau der in den Figuren 3 bis 8 gezeigten $C_H$-Kurven und damit auf das identifizierte Systemvolumen. Dies ist jedoch gewünscht, da sich das Verhalten der Regelstrecke dadurch auch verändert und mit dem im gleichen Verhältnis geänderten identifizierten Volumenwert gut beschrieben werden kann. Das identifizierte Systemvolumen kann auch als Referenzgröße zu dem System aufgefasst werden, für das die Merkmale erstellt wurden.

Eine erhöhte Leckage im System wirkt sich z. B. beim identifizierten Systemvolumen so aus, dass unterschiedliche Werte für den Druckauf- bzw. den Druckabbau berechnet werden. Dies kann dann zur Diagnose der Leckage im Hydrauliksystem genutzt werden.

Der Verlauf des Ersatzkompressionsmoduls $E_G$ nach der Figur 9 kann für die meisten Einsatzfälle sehr gut mit einem Luftanteil von 0,2% beschrieben werden. Das zur Berechnung erforderliche Systemvolumen kann dann entweder aus der zuvor erläuterten Identifikation der Systemparameter ermittelt werden oder so angepasst werden, dass die aus dem Stellgliedhub s sowie aus dem Druckgradienten berechneten Volumenströme $Q_1$ (Gleichung(2)) und $Q_2$ (Gleichung(6)) bei abgeschlossenem Volumen gleiches Verhalten zeigen.

Figur 11 und Figur 12 zeigen das Signalverhalten des Drucks (Figur 11) und des Ventilhubs (Figur 12) bei einer umschaltenden Regelung von einer Geschwindigkeitsregelung in eine Kraftregelung an einem Zylinderantrieb einer Spritzgussmaschine nach der Figur 1, wie es prinzipiell anhand des Standes der Technik schon in der Beschreibungseinleitung erwähnt worden ist. Der Zylinder des Stellantriebs fährt hier gemäß des Diagramms nach der Figur 12 mit einer Ventilöffnung von ca. 25% gegen einen Anschlag. Ist der Anschlag erreicht liegt ein abgeschlossenes Volumen im Hydrauliksystem vor. Durch die große Ventilöffnung steigt der Druck p, wie aus der Figur 11 ersichtlich, auf der großen Kolbenfläche des Stellzylinders sehr schnell an und muss durch rechtzeitiges Zuschalten des Kraftreglers kontrolliert werden, d.h. der Ventilhub wird drastisch reduziert.

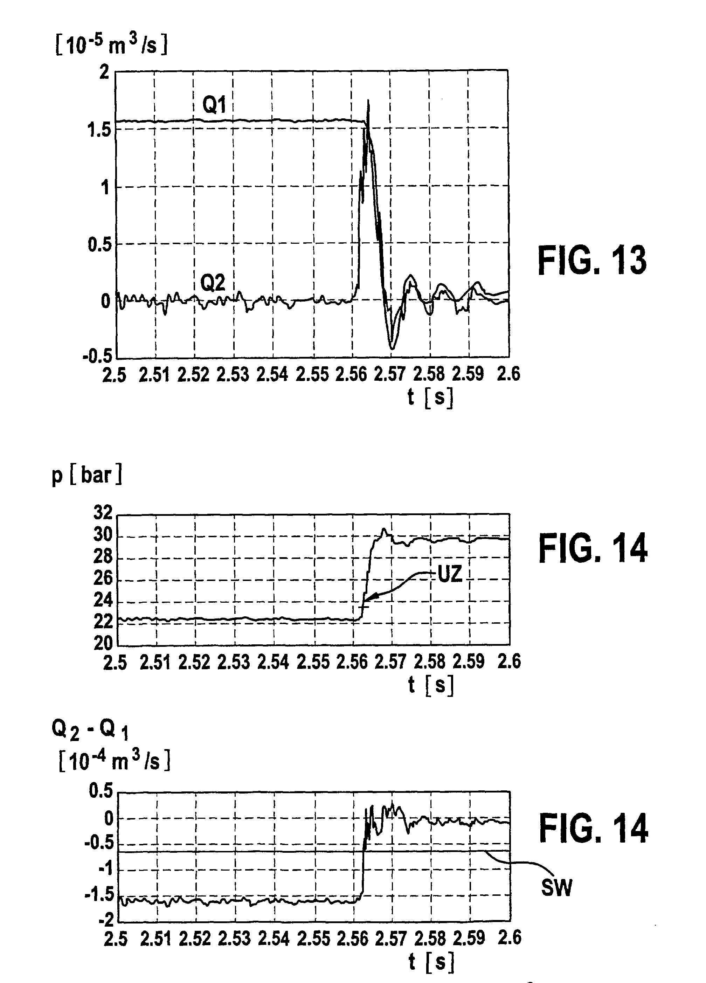

Der Zeitpunkt des zuvor beschriebenen Übergangs von einer Geschwindigkeitsregelung in eine Kraftregelung kann mit dem erfindungsgemäßen zuvor beschriebenen Verfahren vorteilhaft mit einem entsprechenden Umschaltkonzept detektiert werden. Zur Erläuterung wird in Figur 13 der aus dem Ventilhub s berechnete Volumenstrom $Q_1$ der aus dem Druckgradienten berechneten Volumenstrom $Q_2$ gegenübergestellt. Nachdem der Stellzylinder an den Anschlag gefahren ist und ein abgeschlossenes Volumen vorliegt, steigt der Volumenstrom $Q_2$ stark an und nähert sich sehr schnell dem Volumenstrom $Q_1$. Es ist hier gut zu erkennen, dass die beiden anhand der Gleichung (2) und (6) berechneten Volumenströme $Q_1$ und $Q_2$ bei abgeschlossenem Volumen eine sehr gute Übereinstimmung zeigen.

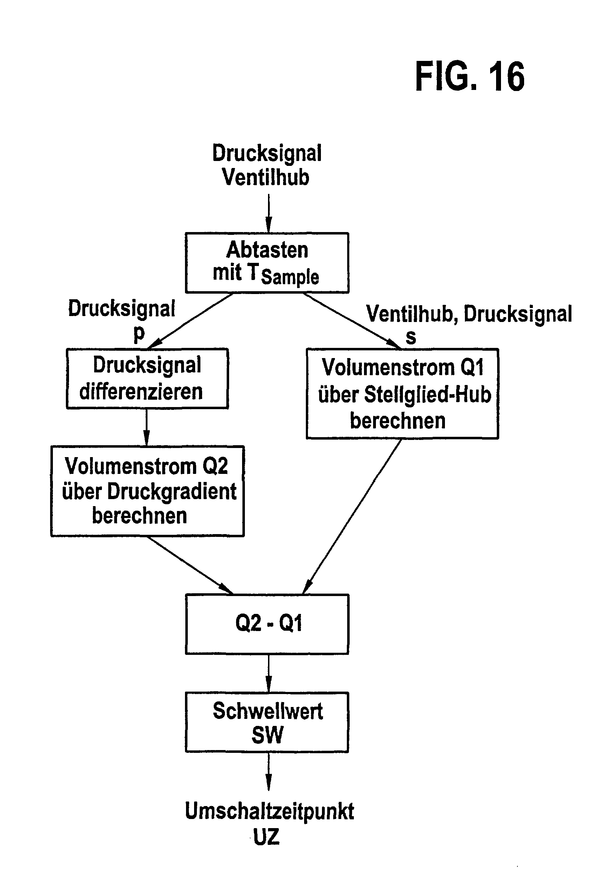

Die Differenz der beiden Volumenströme $Q_1$ und $Q_2$ gemäß der Figur 13 ist dann ein Maß für den eigentlichen Umschaltvorgang. Ist gemäß Figur 14 und 15 die Differenz größer als der Schwellwert SW, hier z. B. $-0,6 * 10^{-4}$ $m^3/s$, so wird der Umschaltzeitpunkt UZ gerade in der Anstiegsphase des Druckes p detektiert, so dass der Kraftregler rechtzeitig zugeschaltet werden kann.

Aus dem Ablaufplan nach Figur 16 sind die Berechnungsschritte zur Detektion des Umschaltzeitpunktes UZ im zeitlichen Verlauf dargestellt. Nach dem Abtasten des erfassten Drucksignals p und des Hubsignals s wird zur Ermittlung des Volumenstroms $Q_2$ das Drucksignal p differenziert und über den Druckgradienten wird dann der Volumenstrom $Q_2$ berechnet. Parallel dazu wird der Volumenstrom $Q_1$ aus dem Hubsignal s berechnet. Die Auswertung der Differenz dieser Volumenwerte $Q_1$ und $Q_2$ erfolgt über den Schwellwert SW, wie anhand er Figuren 14 und 15 beschrienen.

## Patentansprüche

**1.** Verfahren zum Betrieb einer Regelanordnung für ein hydraulisches System, bei dem

- die Istwerte im hydraulischen System durch Sensoren (2) erfasst werden und der Druck (p) der Hydraulikflüssigkeit im hydraulischen System geregelt wird,

    **dadurch gekennzeichnet, dass**

- das wirksame Systemvolumen der Hydraulikflüssigkeit im abgeschlossenen Volumen der Druckregelstrecke aus den gemessenen Werten berechnet wird und dass

- aus dem berechneten Systemvolumen Systemparameter zur Parametrierung der Regelanordnung hergeleitet werden.

**2.** Verfahren nach Anspruch 1, **dadurch gekennzeichnet, dass**

- das wirksame Systemvolumen aus den gemessenen Werten mittels der Bestimmung der hydraulischen Kapazität ($C_H$) der Regelstrecke während des Betriebs der Regelstrecke fortdauernd oder in Intervallen ($\Delta t$) bestimmt wird.

**3.** Verfahren nach Anspruch 2, **dadurch gekennzeichnet, dass**

- die hydraulische Kapazität ($C_H$) mit folgenden Verfahrensschritten ermittelt wird:

- die Istwerte des Drucks (p) und des Ventil- oder Pumpenhubs (s) als Auslenkung des Stellsignals werden in vorgegebenen Zeitabständen ($\Delta t$)abgetastet,

- die abgetasteten Signale werden gefiltert und mit einem Differenzierglied wird der Druckgradient ($\dot{p}$) ermittelt,

- der Druckgradient ($\dot{p}$) wird mit einem Schwellwertdetektor daraufhin untersucht, ob in einer vorgegebenen Zeit eine ausreichende Druckänderung stattfindet,

- ist die Druckänderung kleiner als der vorgegebene Schwellwert, wird die hydraulische Kapazität ($C_H$) gleich Null gesetzt,

- ist die Druckänderung größer als der vorgegebene Schwellwert, wird der Volumenstrom (Q; $Q_1,Q_2$) berechnet, anschließend mit der annähernd gleichen Filterzeitkonstanten (PT1) wie im Differenzierglied (DT1) gefiltert und aus den so ermittelten Werten wird die hydraulische Kapazität ($C_H$) berechnet.

**4.** Verfahren nach einem der vorhergehenden Ansprüche, **dadurch gekennzeichnet, dass**

- das identifizierte Systemvolumen der hydraulischen Druckregelstrecke während des Betriebs mit künstlichen neuronalen Netzen oder mittels einer Fuzzy-Logik ausgewertet und klassifiziert wird, so dass die Systemparameter der Regelanordnung bestimmbar sind.

**5.** Verfahren nach Anspruch 1, **dadurch gekennzeichnet, dass**

- die Systemparameter zur Parametrierung der Regelanordnung zur Ermittlung eines Umschaltzeitpunktes (UZ) für die Umschaltung von einer Geschwindigkeitsregelung oder -steuerung zu einer Druck- oder Kraftregelung in der Regelanordnung herangezogen werden.

**6.** Verfahren nach Anspruch 5, **dadurch gekennzeichnet, dass**

- der Umschaltzeitpunkt (UZ) anhand eines aus dem Hub (s) eines stetig verstellbaren Ventils oder einer stetig verstellbaren Pumpe des hydraulischen Systems (1) berechneten Volumenstroms ($Q_1$) und eines aus dem Druckgradienten berechneten Volumenstroms ($Q_2$) ermittelt wird, wobei die Differenz der beiden Volumenströme ($Q_1,Q_2$) ein Maß für den Umschaltzeitpunkt (UZ) darstellen.

**7.** Verfahren nach Anspruch 6, **dadurch gekennzeichnet, dass**

- der Umschaltzeitpunkt (UZ) mit folgenden Verfahrensschritten ermittelt wird:

- die Istwerte des Drucks (p) und des Ventil- oder Pumpenhubs (s) als Auslenkung des Stellsignals werden in vorgegebenen Zeitabständen ($\Delta$t)abgetastet,

- durch differenzieren wird der Druckgradient ($\dot{p}$) ermittelt,

- der Volumenstrom ($Q_2$) wird aus dem Druckgradienten ($\dot{p}$) errechnet und

der Volumenstrom ($Q_1$) wird aus dem Ventil- oder Pumpenhub (s) errechnet.

8. Regelanordnung, die einen elektrohydraulischen Druckregelkreis, der mit einem stetig verstellbaren Ventil (5) oder einer stetig verstellbaren Pumpe ausgestattet ist, aufweist und die zur Durchführung des Verfahrens nach einem der vorhergehenden Ansprüche dient, **dadurch gekennzeichnet, dass**

- Ventil oder Pumpe mittels einer digitalen Feldbusankopplung mit einem digitalen Regler verbunden sind, in dem die Berechnung des wirksamen Systemvolumens der Hydraulikflüssigkeit im abgeschlossenen Volumen der Druckregelstrecke mittels eines Software-Moduls durchführbar ist.

9. Regelanordnung nach Anspruch 8, **dadurch gekennzeichnet, dass**

- mit dem stetig verstellbaren Ventil (5) oder der stetig verstellbaren Pumpe der hydraulische Stellzylinder einer Spritzgussmaschine (1) steuerbar ist.

**Claims**

1. Method for operating a regulating arrangement for a hydraulic system, in which

- the actual values in the hydraulic system are detected by sensors (2) and a pressure (p) of the hydraulic fluid in the hydraulic system is regulated,

   **characterized in that**

- the effective system volume of the hydraulic fluid in the closed-off volume of the pressure regulation zone is calculated from the measured values, and
- system parameters for parameterizing the regulating arrangement are derived from the calculated system volume.

2. Method according to Claim 1, **characterized in that**

- the effective system volume is determined continuously or at intervals ($\Delta$t) from the measured values by means of the determination of the hydraulic capacity ($C_H$) of the regulation zone during the operation of the regulation zone.

3. Method according to Claim 2, **characterized in that**

- the hydraulic capacity ($C_H$) is determined by means of the following method steps:

- the actual values of the pressure (p) and of the valve or pump stroke (s) are sensed at predetermined time intervals ($\Delta$t) as a deflection of the actuation signal,
- the sensed signals are filtered and the pressure gradient ($p$) is determined by means of a differentiation element,
- the pressure gradient ($p$) is thereupon checked by means of a threshold-value detector as to whether a sufficient pressure change takes place within a predetermined time,
- if the pressure change is lower than the predetermined threshold value, hydraulic capacity ($C_H$) is set equal to zero,
- if the pressure change is higher than the predetermined threshold value, the volume flow ($Q$; $Q_1$, $Q_2$) is calculated and is subsequently filtered by means of approximately the same filter time constants (PT1) as in the differentiation element (DT1), and the hydraulic capacity ($C_H$) is calculated from the values thus determined.

4. Method according to one of the preceding claims, **characterized in that**

- the identified system volume of the hydraulic pressure regulation zone is evaluated and classified during operation by means of artificial neuronal networks or by means of fuzzy logic, so that the system parameters of the regulating arrangement can be determined.

5. Method according to Claim 1, **characterized in that**

- the system parameters are used for parameterizing the regulating arrangement in order to determine the changeover time point (UZ) for the changeover from a speed regulation or control to a pressure or force regulation in the regulating arrangement.

6. Method according to Claim 5, **characterized in that**

- the changeover time point (UZ) is determined by means of a volume flow ($Q_1$) calculated from

the stroke (s) of a continuously adjustable valve or a continuously adjustable pump of the hydraulic system (1) and by means of a volume flow ($Q_2$) calculated from the pressure gradient, the difference in the two volume flows ($Q_1$, $Q_2$) constituting a measure of the changeover time point (UZ).

7. Method according to Claim 6, **characterized in that**

   - the changeover time point (UZ) is determined by means of the following method steps:

   - the actual value of the pressure (p) and of the valve or pump stroke (s) are sensed at predetermined time intervals ($\Delta t$) as a deflection of the actuation signal,
   - the pressure gradient ($p$) is determined by differentiation,
   - the volume flow ($Q_2$) is calculated from the pressure gradient ($p$), and
   - the volume flow ($Q_1$) is calculated from the value or pump stroke (s).

8. Regulating arrangement, which has an electrohydraulic pressure regulation circuit equipped with a continuously adjustable valve (5) or a continuously adjustable pump and which serves for carrying out the method according to one of the preceding claims, **characterized in that**

   - the valves or pumps are connected by means of a digital field-bus coupling to a digital controller, in which the calculation of the effective system volume of the hydraulic fluid in the closed-off volume of the pressure regulation zone can be carried out by means of a software module.

9. Regulating arrangement according to Claim 8, **characterized in that**

   - the hydraulic actuating cylinder of an injection-moulding machine (1) can be controlled by means of the continuously adjustable valve (5) or the continuously adjustable pump.

**Revendications**

1. Procédé de fonctionnement d'un dispositif de régulation pour un système hydraulique, selon lequel

   - les valeurs réelles dans le système hydraulique sont enregistrées par des capteurs (2) et la pression (p) du liquide hydraulique dans le système hydraulique est régulée,

**caractérisé en ce que**

   - le volume-système effectif du liquide hydraulique dans le volume fermé de l'ensemble régulé en pression est calculé à partir des valeurs mesurées et
   - à partir du volume-système calculé extrait des paramètres-système pour le paramétrage du dispositif de régulation.

2. Procédé selon la revendication 1, **caractérisé en ce que**

   - le volume-système effectif est déterminé en continu ou à intervalles ($\Delta t$) à partir des valeurs mesurées, au moyen de la détermination de la capacité hydraulique ($C_H$) de l'ensemble régulé, pendant le fonctionnement de l'ensemble régulé.

3. Procédé selon la revendication 2, **caractérisé en ce que**

   - la capacité hydraulique ($C_H$) est déterminée à l'aide des étapes de procédé suivantes :

   - les valeurs réelles de la pression (p) et de la course de soupape ou de pompe (s) en tant que course du signal de réglage sont lues à intervalles de temps prédéterminés ($\Delta t$),
   - les signaux lus sont filtrés et le gradient de pression ($\dot{p}$) est déterminé à l'aide d'un organe de différenciation,
   - le gradient de pression ($\cdot p$) est analysé à l'aide d'un détecteur de valeur de seuil afin de vérifier si une modification de pression suffisante a lieu dans un temps prédéterminé,
   - si la modification de pression est inférieure à la valeur de seuil prédéterminée, la capacité hydraulique ($C_H$) est ramenée à zéro,
   - si la modification de pression est supérieure à la valeur de seuil prédéterminée, le débit volumique (Q ; $Q_1$, $Q_2$) est calculé puis est filtré à l'aide des constantes temporelles de filtre (PT1) approximativement égales à celles de l'organe de différenciation (DT1), et à partir des valeurs ainsi déterminées, la capacité hydraulique ($C_H$) est calculée.

4. Procédé selon l'une des revendications précédentes, **caractérisé en ce que**

   - le volume-système identifié de l'ensemble hydraulique régulé en pression est exploité et classifié pendant le fonctionnement, à l'aide de réseaux neuronaux artificiels ou au moyen d'une logique floue, ce qui permet de déterminer les paramètres-système du dispositif de régulation.

**5.** Procédé selon la revendication 1, **caractérisé en ce que**

- les paramètres-système pour le paramétrage du dispositif de régulation sont utilisés pour déterminer un moment de commutation (UZ) pour le passage d'une régulation ou d'une commande de vitesse à une régulation de pression ou de force dans le dispositif de régulation.

**6.** Procédé selon la revendication 5, **caractérisé en ce que**

- le moment de commutation (UZ) est déterminé à l'aide d'un débit volumique ($Q_1$) calculé à partir de la course (s) d'une soupape pouvant être réglée en permanence ou d'une pompe pouvant être réglée en permanence et d'un débit volumique ($Q_2$) calculé à partir du gradient de pression, la différence entre les deux débits volumiques ($Q_1$, $Q_2$) représentant une mesure pour le moment de commutation (UZ).

**7.** Procédé selon la revendication 6, **caractérisé en ce que**

- le moment de commutation (UZ) est déterminé à l'aide des étapes de procédé suivantes :

- les valeurs réelles de la pression (p) et de la course de soupape ou de pompe (s) en tant que course du signal de réglage sont lues à intervalles de temps prédéterminés ($\Delta t$),
- le gradient de pression ($\dot{p}$) est déterminé par différenciation,
- le débit volumique ($Q_2$) est calculé à partir du gradient de pression ($\dot{p}$) et
- le débit volumique ($Q_1$) est calculé à partir de la course de soupape ou de pompe (s).

**8.** Dispositif de régulation, présentant un circuit de régulation de pression électro-hydraulique équipé d'une soupape pouvant être réglée en permanence (5) ou d'une pompe pouvant être réglée en permanence, et permettant de mettre en oeuvre le procédé selon l'une des revendications précédentes, **caractérisé en ce que**

- la soupape ou la pompe est reliée au moyen d'un couplage par bus domotique numérique à un régulateur numérique, dans lequel peut être effectué le calcul du volume-système effectif du liquide hydraulique dans le volume fermé de l'ensemble régulé en pression, au moyen d'un module logiciel.

**9.** Dispositif de régulation selon la revendication 8, **caractérisé en ce que**

- la soupape pouvant être réglée en permanence (5) ou la pompe pouvant être réglée en permanence permet de commander le vérin de réglage hydraulique d'une machine de moulage par injection (1).

EP 1 342 015 B1

FIG. 1

11

**FIG. 2**

Drucksignal
Ventilhub

↓

```
┌─────────────────────┐
│      Abtasten        │
│  mit △ts = 0,2ms     │
└─────────────────────┘
```

↓

```
┌─────────────────────┐
│  Tiefpaß 2. Ordnung  │
└─────────────────────┘
```

Drucksignal
Ventilhub                     Drucksignal

```
                    ┌─────────────────────┐
                    │   differenzieren     │
                    │      mit DT₁         │
                    └─────────────────────┘
```

Druckgradient $\dot{p}$

```
┌──────────────────────────────────────┐
│              Schwellwert              │
│          $\dot{p}$ > 200 bar/s        │
└──────────────────────────────────────┘
```

↓

```
┌─────────────────────┐
│    berechnen des     │
│    Volumenstroms     │
└─────────────────────┘
```

Volumenstrom Q

```
┌─────────────────────┐
│  Filterung mit PT₁   │
└─────────────────────┘
```

```
┌──────────────────────────────────────┐
│             Berechnen der             │
│    hydraulische Kapazität $C_H$       │
└──────────────────────────────────────┘
```

↓

hydraulische Kapazität $C_H$

# FIG. 3

# FIG. 4

FIG. 5

## FIG. 6

$C_H$

$[\,3{,}73 \cdot 10^{-12}\ m^5/N\,]$

## FIG. 7

$C_H$

$[\,3{,}73 \cdot 10^{-12}\ m^5/N\,]$

# FIG. 8

$C_H$ 190bar -> 280bar

$[3{,}73 \cdot 10^{-12} \ m^5/_N]$

$C_H$ 190bar -> 100bar

$[3{,}73 \cdot 10^{-12} \ m^5/_N]$

t [ s ]

t [ s ]

# FIG. 9

$E_G \ [N/m^2]$

$\times 10^9$

$E_0$

10%

5%

3%

2%

1,5%

1%

0,5%

0,1%

Druck [ bar ]

normierte
Eingangswerte

FIG. 10

FIG. 11

FIG. 12

[ $10^{-5}$ m$^3$/s ]

FIG. 13

p [ bar ]

FIG. 14

Q$_2$ - Q$_1$
[ $10^{-4}$ m$^3$/s ]

FIG. 14

# FIG. 16

Drucksignal
Ventilhub

↓

Abtasten
mit $T_{Sample}$

Drucksignal
p

Ventilhub, Drucksignal
s

Drucksignal
differenzieren

Volumenstrom Q1
über Stellglied-Hub
berechnen

↓

Volumenstrom Q2
über Druckgradient
berechnen

Q2 - Q1

↓

Schwellwert
SW

↓

Umschaltzeitpunkt
UZ